# EUROPÄISCHE PATENTSCHRIFT

(11) **EP 0 775 665 B1**
(45) Veröffentlichungstag und Bekanntmachung des Hinweises auf die Patenterteilung: **29.09.1999**
(21) Anmeldenummer: 95250296.1
(22) Anmeldetag: 05.12.1995
(51) Int. Cl.: B66F 9/07, B65G 1/04

(54) **Vorrichtung zum Aus- und Einfahren von Stückgut in einem Warenhochlager**
Device for moving unit loads out of and into a high-rise warehouse
Dispositif pour l'extraction et l'insertion de merchandises dans un magasin de grande hauteur

(30) Priorität: 26.10.1995 DE 19541123
(43) Veröffentlichungstag der Anmeldung: 28.05.1997
(73) Patentinhaber: MANNESMANN Aktiengesellschaft, 40213 Düsseldorf (DE)
(72) Erfinder: Oser, Jörg, Prof. Dr., A-8010 Graz (AT)
(74) Vertreter: Presting, Hans-Joachim, Dipl.-Ing.

(56) Entgegenhaltungen:
- DE-A- 4 202 243
- DE-A- 4 317 144
- DE-A- 4 400 829
- DE-A- 4 423 545
- FR-A- 2 587 692

## Beschreibung

Die Erfindung betrifft eine Vorrichtung zum Aus- oder Einfahren von Stückgut in einem Warenhochlager mit einem in einem einfach breiten Lagergang verfahrbaren Regalbediengerät und mit einer Hubeinrichtung, bestehend aus einem sich in Lagergangrichtung erstreckenden Grundrahmen der einen in ein Regal verfahrbaren Teleskopwagen trägt, an dem ein zumindest zweifach senkrecht zur Lagergangrichtung unter ein darüber liegendes Fach des Warenhochlagers ausfahrbares Flachteleskop gelagert ist.

Derartige Vorrichtungen sind unter dem Aspekt eines mehrfach breiten Lagerganges bekannt (EP 0 029 073 B1), wobei zwei parallel zueinander verlaufende Regale zwischen sich eine Gasse bilden, in der das Regalbediengerät verfahrbar ist. An dem Regalbediengerät ist ein Hubschlitten höhenverstellbar geführt. Das Regalbediengerät besitzt zumindest eine in Richtung senkrecht zur Regalfront bewegliche Fördervorrichtung, die aus zwei Einzelfördervorrichtungen besteht. Auf den Einzelfördervorrichtungen, die gemeinsam parallel zur Front der Regale, d.h. in Richtung der Gasse verfahrbar sind, befindet sich ein Querförderer, der beide Einzelfördervorrichtungen bedient. Diese Anordnung von zwei Einzelfördervorrichtungen mit einem gemeinsamen Querförderer bedeutet für eine Mehrfachlagerung im Regal eine entsprechend breite Gasse, d.h. eine mehrfach tiefe Gangbreite. Diese mehrfach tiefe Gangbreite führt nicht nur zu einem schlechten Volumennutzungsgrad der Gesamtanlage, sondem auch zu schweren und teueren Ladeplattformen und Lastaufnahmemitteln.

Aus der DE-A-42 02 243 ist eine Regalbedieneinrichtung mit einem sich in Lagergangrichtung.erstreckenden Grundrahmen bekannt, der einen in ein Regal verfahrbaren Teleskopwagen trägt, an dem ein zumindest zweifach senkrecht zur Lagergangrichtung unter ein darüber liegendes Fach des Warenhochlagers ausfahrbares Flachteleskop gelagert ist.

Die DE-A-44 23 545 offenbart ein Regalbediengerät für ein Hochlager mit Einlagerungskanälen, die zur Aufnahme von Lagerbehältem vorgesehen sind und welches Regalbediengerät einen heb- und senkbaren Schlitten aufweist, der an einem entlang der Front des Lagers verfahrbaren Gestell gehalten ist, wobei der Schlitten eine einem ganzzahligen Vielfachen der Breite der Lagerbehälter, bzw. der Einlagerungskanäle entsprechende, sich in Bewegungsrichtung des Gestelles erstreckende Länge aufweist und der Schlitten eine in Richtung der Einlagerungskanäle ausfahrbare Fördereinrichtung, sowie mindestens eine quer zu dieser in Bewegungsrichtung des Gestelles verfahrbare Querfördereinrichtung aufweist, wobei an dem Gestell übereinander angeordnete als Abstellplätze für Lagerbehälter dienende Plattformen fest angeordnet sind.

Der Erfindung liegt die Aufgabe zugrunde, in Regallagem mit doppelt oder dreifach tiefer Lagerung bei einfacher Gangbreite einen besseren Volumennutzungsgrad und auch leichtere und kostengünstigere Ladeplattformen und Lastaufnahmemittel zu erzielen.

Der Einsatz der Erfindung soll in Regalzeilenlagem mit doppelt oder dreifach tiefer Lagerung bei einfacher Gang breite erfolgen. Als Ladeeinheiten sind leichte bis mittelschwere Stückgüter, wie z.B. Behälter, Kartons u.dgl. mit MehrfachlastAufnahmetechnik in Form einer Ladeplattform für drei Stellplätze mit Platzwechselmechanismus vorzusehen.

Die gestellte Aufgabe wird erfindungsgemäß dadurch gelöst, daß am vordersten Teleskopabschnitt jeweils hinter das jeweilige Stückgutende nach unten in das Stückgutprofil oder in eine etwa waagerechte Lage unter dem Teleskopwagen gegenläufig schwenkbare Mitnehmer- bzw. Anschlag-armpaare drehantreibbar gelagert sind.
Dadurch wird ein selektiver Stückgutzugriff auch bei mehrfach z.B. zwei- oder dreifach tiefer Lagerung möglich. Die Ein-/Auslagerung des Stückguts erfolgt entweder unmittelbar oder beim Zugriff auf die hintere Fachtiefe mittels Umlagerspiels. Diese Teleskop-Überfahrtechnik ist in einem niedrigen Zwischenraum unter dem Fachboden möglich, wobei ein äußerst flacher, d.h. mit niedriger Bauhöhe gebautes Flachteleskop eingesetzt wird. Hierzu fährt das Flachteleskop in einen Spalt zwischen Oberkante Stückgut und Unterkante des Flachbodens ein. Diese Fachboden-Regalanordnung erlaubt eine kostengünstige und volumensparende Lagerung der Ladeeinheiten.

Die Anpassung der Mitnehmer bzw. Anschlagposition an unterschiedlich bemessenes Stückgut, wie z.B. Behälter, erfolgt vorteilhafterweise über die unterschiedlichen Schwenkwinkel der Mitnehmer- bzw. Anschlagarmpaare.

In Weiterbildung der Erfindung ist vorgesehen, daß unter dem Flachteleskop zumindest mit Abstand der größten Stückguthöhe und parallel zu dem Grundrahmen ein Verschiebewagen für das aufgeladene Stückgut in Lagergangrichtung verfahrbar ist. Dadurch wird ein Zusammenspiel des Flachteleskops mit dem Verschiebewagen für die schwierigsten Platzwechsel des Stückguts ermöglicht.

Nach weiteren Merkmalen wird vorgeschlagen, daß der Teleskopwagen mit dem Flachteleskop mittels einer lotrechten Hubeinrichtung auf die jeweilige Höhe des Stückgutes einstellbar ist. Dadurch erfolgt eine Anpassung an unterschiedlich hohe Stückgut-Arten, und diese werden in eine optimale Mitnahme- bzw. Anschlagposition gebracht.

In Ausgestaltung der Erfindung ist vorgesehen, daß die Hubeinrichtung den Teleskopwagen einschließt, der an einem Hubrahmen höhenverstellbar geführt ist und daß der Hubrahmen mittels eines Hubmotors und Hubmitteln in Vertikalführungen antreibbar ist. Dadurch kann der Teleskopwagen mit dem Flachteleskop auf die jeweils günstigste Höhenlage gefahren werden.

In Weiterbildung der Erfindung wird vorgeschlagen, daß der an dem Hubrahmen gelagerte Teleskopwagen und der Verschiebewagen mittels eines gemeinsamen Antriebs antreibbar ist, wobei am Abtrieb des Antriebs zwei wechselweise schaltbare Kupplungen vorgesehen sind und wobei der jeweils stillstehende Wagen mittels einer Dauermagnet-Bremse festgehalten ist. Diese Lösung wird möglich, weil die Bewegungsabläufe beim Ein- oder Auslagern des Stückguts nie zeitgleich erfolgen, so daß jeweils nur ein Antrieb zu bestimmten Zeiten benötigt wird. Der jeweils stillstehende Wagen wird mittels der Dauermagnetbremse festgehalten, so daß auch bei Stromausfall oder einer Not-Ausschaltung keine unkontrollierten Bewegungen stattfinden können.

Eine weitere Verbesserung der Erfindung besteht darin, daß das Flachteleskop in Z-Richtung mittels eines Teleskopiermotors aus- oder einfahrbar ist, der am Hubrahmen gelagert ist.

Eine Weiterentwicklung der Erfindung ist dadurch gekennzeichnet, daß das einzelne Stückgut mittels der Mitnehmer- bzw. Anschlagarmpaare kraftbegrenzt gegen Beschleunigungskräfte einklemmbar ist. Ein das Stückgut pressendes Greifen ist dabei nicht erforderlich. Vielmehr bildet diese Maßnahme eine Sicherheitsvorkehrung gegen das Verrutschen des Stückguts während der Transportbewegungen.

Außerdem ist es vorteilhaft, daß die Klemmkraft für das Stückgut mittels eines Klemmotors und ein an diesen angeschlossenes Exzentergestänge, das über paarweise in dem Grundrahmen gelagerte Verriegelungswellen jeweils ein stimseitig am Stückgut anlegbares Klappenpaar betätigt, erzeugbar ist. Dadurch kann das Stückgut nicht nur am Verrutschen gehindert werden, sondem es kann auch in seiner gewollten Lage gehalten werden.

Schließlich besteht eine Verbesserung der Erfindung darin, daß die Mitnehmer- bzw. Anschlagarmpaare an den Enden einer mittels eines Schwenkarmtriebs angetriebenen Welle drehbar gelagert sind.

Ein Ausführungsbeispiel der Erfindung ist in der Zeichnung dargestellt und wird im folgenden näher beschrieben. Es zeigen:
- Fig. 1: eine Seitenansicht der Vorrichtung quer zur Gasse zwischen den Regalen des Warenhochlagers,
- Fig. 2: eine Vorderansicht der Vorrichtung in Blickrichtung auf die Regalwand und
- Fig. 3: einen Grundriß der Vorrichtung in der Gasse zwischen den Regalen bei einfach breitem Lagergang.

Die Vorrichtung zum Aus- oder Einfahren von Stückgut in einem Warenhochlager 1 arbeitet in einem einfach breiten Lagergang 2 mit einem verfahrbaren Regalbediengerät 5 und mit einer Hubeinrichtung 6. Die Hubeinrichtung besteht aus einem sich in Lagergangrichtung 2a erstreckenden Grundrahmen 7, der an lotrechten Führungen 8a und 8b des Regalbediengerätes 5 höhenverstellbar ist. Die Hubeinrichtung 6 verfügt über eine Ladeplattform 9, auf der eine zumindest zweifach in Richtung der Ein- bzw. Auslagerung verfahrbare, als Teleskopgabel ausgebildete Fördereinrichtung angeordnet ist.

Der Einsatz der Vorrichtung erfolgt jedoch in Regalzeilenlagem mit doppelt oder dreifach tiefer Lagerung bei einfacher Lagergangbreite. Als Ladeeinheiten sind leichte bis mittelschwere Stückgüter, wie z.B. Behälter, Kartons u.dgl. mit Mehrfachlastaufnahmetechnik in Form einer Ladeplattform für drei Stellplätze mit Platzwechselmechanismus vorgesehen.

Der Grundrahmen 7 weist einen in Lagergangrichtung 2a verfahrbaren Teleskopwagen 10 auf, an dem ein zumindest zweifach senkrecht zur Lagergangrichtung 2a unter einem darüberliegenden Fach 4 (Winkelauflage oder Fachboden) des Warenhochlagers 1 ausfahrbares Flachteleskop 11 gelagert ist. Am vordersten Teleskopabschnitt 11a sind jeweils hinter das jeweilige Stückgutende 12a bzw. 12b des Stückgutes 12 nach unten in das Stückgutprofil 12c oder in eine etwa waagerechte Lage unter dem Teleskopwagen 10 gegenläufig schwenkbare Mitnehmer- bzw. Anschlagarmpaare 13 drehantreibbar gelagert. Der Teleskopwagen 10 fährt die Teleskopgabeln somit in den Spalt zwischen Oberkante des Stückgutes 12 und Unterkante des Fachbodens 4 ein.

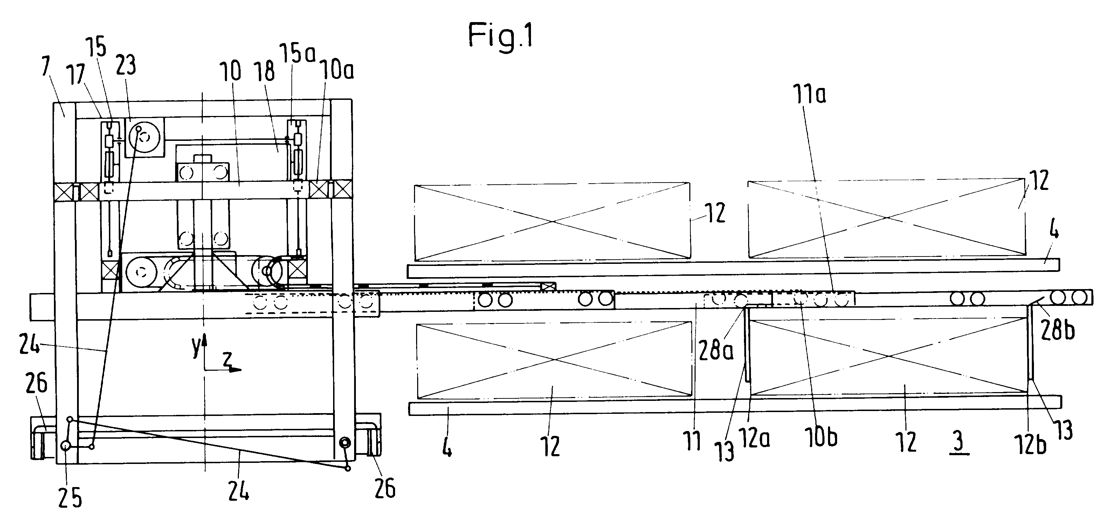

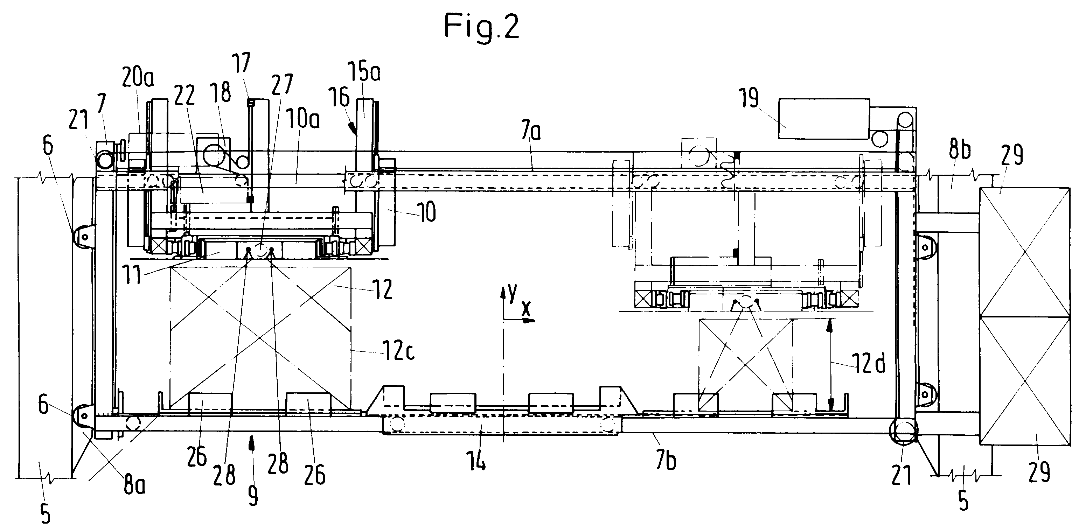

Hierbei bildet der Grundrahmen 7 (Fig. 1 und 2) eine obere Rahmenschiene 7a und eine untere Rahmenschiene 7b, wobei auf der oberen Rahmenschiene 7a der Teleskopwagen 10 die Bewegung in X-Richtung ausführt und ebenso ein Verschiebewagen 14, der auf der unteren Rahmenschiene 7b verfahrbar ist; aus Fig. 2 ergibt sich hierzu ein Dreistellungs-System zwischen dem Teleskopwagen 10 und dem Verschiebewagen 14.

Der Verschiebewagen 14 ist unter dem Flachteleskop 11 zumindest mit Abstand der größten Stückguthöhe 12d (Fig. 2) und parallel zu dem Grundrahmen für das aufgeladene Stückgut 12 in Lagergangrichtung 2a verfahrbar.

Der Teleskopwagen 10 nimmt außer einem Teleskoprahmen 10a das Flachteleskop 11 mit der Umlenkrolle 10b für einen nicht näher dargestellten Antrieb auf der Basis eines Zugmittels auf.

Wie sich aus Fig. 2 ergibt, ist der Teleskopwagen 10 mit dem Flachteleskop 11 mittels einer lotrechten Hubeinrichtung 15 auf die jeweilige Höhe 12d des Stückgutes 12 einstellbar, wobei in Fig. 2 links ein höheres Stückgut 12 und rechts ein niedrigeres Stückgut vorausgesetzt wird, woraus sich die unterschiedlichen Höhenstellungen des Teleskopwagens 10 ergeben.

Die Hubeinrichtung 15 ist am Teleskopwagen 10 befestigt, wobei der Hubrahmen 15a höhenverstellbar geführt ist, Außerdem ist der Hubrahmen 15a mittels eines Hubmotors 18 und Hubmitteln 17 in Vertikalführungen 16 höhenverstellbar angetrieben.

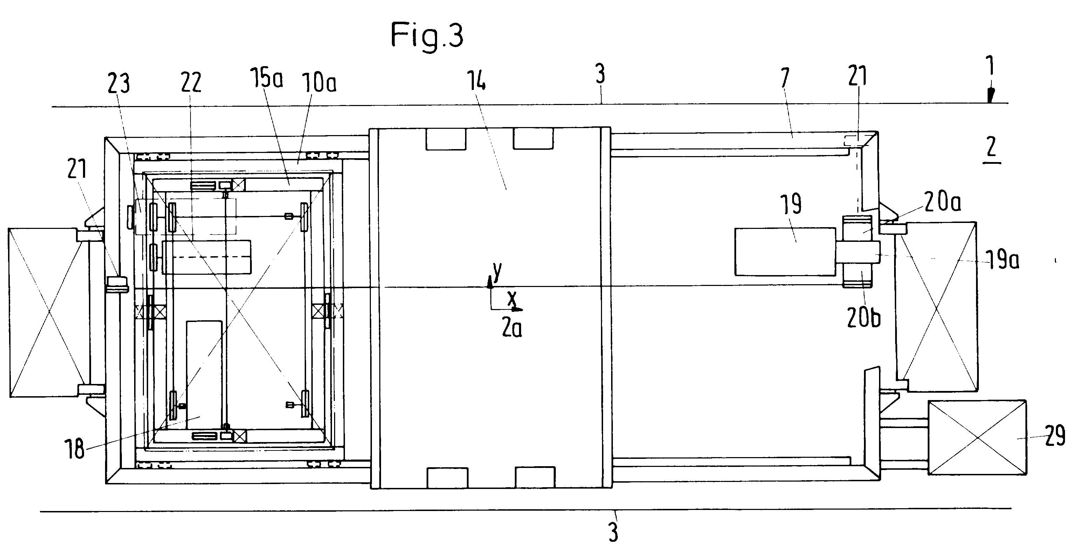

Der Teleskopwagen 10 mit dem Hubrahmen 15a und der Verschiebewagen 14 sind mittels eines gemeinsamen Antriebes 19 antreibbar, wobei am Abtrieb 19a (Fig. 3) des Antriebs 19 zwei wechselweise schaltbare Kupplungen 20a, 20b vorgesehen sind und wobei der jeweils stillstehende Wagen, entweder der Teleskopwagen 10 oder der Verschiebewagen 14 mittels einer Dauermagnetbremse 21 festgehalten ist.

Das Flachteleskop 11 ist in Z-Richtung mittels eines Teleskopiermotors 22 (Fig. 3) aus- oder einfahrbar, wobei der Teleskopiermotor 22 am Hubrahmen 15a gelagert ist.

Als Sicherung gegen Verrutschen des Stückguts 12 ist das einzelne Stückgut 12 mittels der Mitnehmer- bzw. Anschlagarmpaare 13 kraftbegrenzt gegen Beschleunigungskräfte einklemmbar. Die Klemmkraft für das Stückgut 12 wird mittels eines Klemmotors 23 (Fig. 3) und ein an diesen angeschlossenes Exzentergestänge 24 erzeugt, wobei letzteres über paarweise in dem Grundrahmen 7 gelagerte Verriegelungswellen 25 jeweils ein stirnseitig am Stückgut 12 anlegbares Klappenpaar 26 betätigt. Weiters sind die Mitnehmer- bzw. Anschlagarmpaare 13 an den Enden 28a einer mittels eines Schwenkarmantriebs 27 angetriebenen Welle 28 bewegbar.

Für die Energieversorgung und die Steuerung des Hubmotors 18, des gemeinsamen Antriebs 19, der Dauermagnetbremse 21, des Teleskopiermotors 22 und des Klemmotors 23 sind die entsprechenden elektrischen bzw. elektronischen Einrichtungen in Schaltschränken 29 angeordnet.

### Bezugszeichenliste

- 1: Warenhochlager
- 2: Lagergang
- 2a: Lagergangrichtung
- 3: Regal
- 4: Fach
- 5: Regalbediengerät
- 6: Hubeinrichtung
- 7: Grundrahmen
- 7a: obere Rahmenschiene
- 7b: untere Rahmenschiene
- 8a: lotrechte Führung
- 8b: lotrechte Führung
- 9: Ladeplattform
- 10: Teleskopwagen
- 10a: Teleskoprahmen
- 10b: Umlenkrolle
- 11: Flachteleskop
- 11a: vorderster Teleskopabschnitt
- 12: Stückgut
- 12a: Stückgutende
- 12b: Stückgutende
- 12c: Stückgutprofil
- 12d: Stückguthöhe
- 13: Mitnehmer- bzw. Anschlagarmpaare
- 14: Verschiebewagen
- 15: Hubeinrichtung
- 15a: Hubrahmen
- 16: Vertikalführung
- 17: Hubmittel
- 18: Hubmotor
- 19: gemeinsamer Antrieb
- 19a: Abtneb
- 20a: Kupplung
- 20b: Kupplung
- 21: Dauermagnetbremse
- 22: Teleskopiermotor
- 23: Klemmotor
- 24: Exzentergestänge
- 25: Verriegelungswelle
- 26: Klappenpaar
- 27: Schwenkarmantrieb
- 28: Welle
- 28a: Wellenende
- 28b: Wellenende
- 29: Schaltschrank

## Patentansprüche

1. Vorrichtung zum Aus- oder Einfahren von Stückgut in einem Warenhochlager (1) mit einem in einem einfach breiten Lagergang (2) verfahrbaren Regalbediengerät (5) und mit einer Hubeinrichtung (6), bestehend aus einem sich in Lagergangrichtung erstreckenden Grundrahmen (7) der einen in ein Regal (3) verfahrbaren Teleskopwagen (10) trägt, an dem ein zumindest zweifach senkrecht zur Lagergangrichtung (2a) unter ein darüber liegendes Fach (4) des Warenhochlagers (1) ausfahrbares Flachteleskop (11) gelagert ist,
dadurch gekennzeichnet,
daß am vordersten Teleskopabschnitt (11a) jeweils hinter das jeweilige Stückgutende (12a;12b) nach unten in das Stückgutprofil (12c) oder in eine etwa waagerechte Lage unter dem Teleskopwagen (10) gegenläufig schwenkbare Mitnehmer- bzw. Anschlagarmpaare (13) drehantreibbar gelagert sind.

2. Vorrichtung nach Anspruch 1,
dadurch gekennzeichnet,
daß unter dem Flachteleskop (11) zumindest mit Abstand der größten Stückguthöhe (12d) und parallel zu dem Grundrahmen (7) ein Verschiebewagen (14) für das aufgeladene Stückgut (12) in Lagergangrichtung (2a) verfahrbar ist.

3. Vorrichtung nach einem der Ansprüche 1 oder 2,
dadurch gekennzeichnet,
daß der Teleskopwagen (10) mit dem Flachteleskop (11) mittels einer lotrechten Hubeinrichtung (15) auf die jeweilige Höhe des Stückgutes (12) einstellbar ist.

4. Vorrichtung nach einem der Ansprüche 1 bis 3,
dadurch gekennzeichnet,
daß die Hubeinrichtung (15) den Teleskopwagen (10) einschließt, der an einem Hubrahmen (15a) höhenverstellbar geführt ist und daß der Hubrahmen (15a) mittels eines Hubmotors (18) und Hubmitteln (17) in Vertikalführungen (16) antreibbar ist.

5. Vorrichtung nach einem der Ansprüche 1 bis 4,
dadurch gekennzeichnet,
daß der an dem Hubrahmen (15a) gelagerte Teleskopwagen (10) und der Verschiebewagen (14) mittels eines gemeinsamen Antriebs (19) antreibbar ist, wobei am Abtrieb (19a) des Antriebs (19) zwei wechselweise schaltbare Kupplungen (20a,20b) vorgesehen sind und wobei der jeweils stillstehende Wagen (10;14) mittels einer Dauermagnetbremse (21) festgehalten ist.

6. Vorrichtung nach einem der Ansprüche 1 bis 5,
dadurch gekennzeichnet,
daß das Flachteleskop (11) in Z-Richtung mittels eines Teleskopiermotors (22) aus - oder einfahrbar ist, der am Hubrahmen (15a) gelagert ist.

7. Vorrichtung nach einem der Ansprüche 1 bis 6,
dadurch gekennzeichnet,
daß das einzelne Stückgut (12) mittels der Mitnehmer- bzw. Anschlagarmpaare (13) kraftbegrenzt gegen Beschleunigungskräfte einklemmbar ist.

8. Vorrichtung nach Anspruch 7,
dadurch gekennzeichnet,
daß die Klemmkraft für das Stückgut (12) mittels eines Klemmotors (23) und ein an diesen angeschlossenes Exzentergestänge (24) , das über paarweise in dem Grundrahmen (7) gelagerte Verriegelungswellen (25) jeweils ein stirnseitig am Stückgut (12) anlegbares Klappenpaar (26) betätigt, erzeugbar ist.

9. Vorrichtung nach einem der Ansprüche 1 bis 8,
dadurch gekennzeichnet,
daß die Mitnehmer- bzw. Anschlagarmpaare (13) an den Enden (28a) einer mittels eines Schwenkarmtriebs (27) angetriebenen Welle (28) drehbar gelagert sind.

## Claims

1. A device for retrieving or introducing items from or into a high-bay warehouse store (1), comprising a storage and retrieval unit (5) displaceable in a single width storage aisle (2) and a lifting device (6), consisting of a base frame (7) which extends in the direction of the storage aisle and carries a telescopic carria.ge (10) displaceable into a rack (3), on which telescopic carriage (10) there is mounted a flat telescope (11) which may be extended at least two-fold perpendicularly to the storage aisle direction (2a) beneath a bay (4) lying thereabove of the high-bay warehouse store (1),
characterised in that
carrier and stop arm pairs (13) are mounted for rotatable actuation on the foremost telescope portion (11a), which carrier and stop arm pairs (13) are respectively capable of swivelling in opposite directions behind the respective item end (12a; 12b) downwards into the item profile (12c) or into an approximately horizontal position beneath the telescopic carriage (10).

2. A device according to claim 1,
characterised in that
a moving carriage (14) for the loaded items (12) may be displaced in the storage aisle direction (2a) beneath the flat telescope (11) at a distance corresponding at least to the largest item height (12d) and parallel to the base frame (7).

3. A device according to either one of claims 1 or 2,
characterised in that
the telescopic carriage (1) with the flat telescope (11) may be adjusted to the height of the respective item (12) by means of a vertical lifting device (14).

4. A device according to any one of claims 1 to 3,
characterised in that
the lifting device (15) includes the telescopic carriage (10), which is guided height-adjustably on a lifting frame (15a) and in that the lifting frame (15a) may be driven in vertical guides (16) by means of a lifting motor (18) and lifting means (17).

5. A device according to any one of claims 1 to 4,
characterised in that
the telescopic carriage (10) mounted on the lifting frame (15a) and the moving carriage (14) may be driven by means of a common drive (19), wherein two clutches (20a, 20b) connectable alternately are provided on the driven side (19a) of the drive (19) and wherein the respectively stationary carriage (10; 14) is held firm by means of a permanent magnet brake (21).

6. A device according to any one of claims 1 to 5,
characterised in that
the flat telescope (11) may be extended or retracted in the Z-direction by means of a telescoping motor (22), which is mounted on the lifting frame (15a).

7. A device according to any one of claims 1 to 6,
characterised in that
the individual item (12) may be gripped by means of the carrier and stop arm pairs (13) in a force-limited manner with regard to accelerating forces.

8. A device according to claim 7,
characterised in that
the fcrce for clamping the item (12) may be produced by means of a clamping motor (23) and an eccentric rod assembly (24) connected thereto, which actuates a pair of flaps (26) positionable against the end of the item (12) in each case by means of locking shafts (25) mounted in pairs in the base frame (7).

9. A device according to any one of claims 1 to 8,
characterised in that
the carrier and stop arm pairs (13) are mounted rotatively at the ends (28a) of a shaft (28) driven by means of a swivel arm drive (27).

## Revendications

1. Dispositif pour extraire ou insérer des marchandises dans un magasin de grande hauteur (1), comportant un appareil de service de rayonnages (5) déplaçable dans une allée de magasin (2) de largeur simple, et un dispositif de levage (6), constitué d'un bâti de base (7) s'étendant en direction de l'allée de magasin, qui porte un chariot télescopique (10) déplaçable dans un rayonnage (3), sur lequel est monté un dispositif télescopique plat (11) pouvant se déployer au moins deux fois perpendiculairement à la direction (2a) de l'allée de magasin sous un compartiment sus-jacent (4) du magasin de grande hauteur (1),
caractérisé en ce que des paires de bras de butée ou d'entraîneur (13), pouvant pivoter en sens contraires, sont montées en pouvant être entraînées en rotation sur le tronçon le plus avant (11a) du dispositif télescopique à chaque fois derrière l'extrémité respective (12a; 12b) des marchandises vers le bas dans le profil (12c) des marchandises ou dans une position sensiblement horizontale sous le chariot télescopique (10).

2. Dispositif selon la revendication 1,
caractérisé en ce qu'un chariot de déplacement (14) pour les marchandises chargées (12) est déplaçable dans la direction (2a) de l'allée de magasin au-dessous du dispositif télescopique plat (11) au moins à distance de la plus grande hauteur (12d) des marchandises et parallèlement au bâti de base (7).

3. Dispositif selon une des revendications 1 ou 2,
caractérisé en ce que le chariot télescopique (10) avec le dispositif télescopique plat (11) est réglable, au moyen d'un dispositif de levage vertical (15), à la hauteur respective des marchandises (12).

4. Dispositif selon une des revendications 1 à 3,
caractérisé en ce que le dispositif de levage (15) inclut le chariot télescopique (10) qui est guidé de façon réglable en hauteur sur un bâti de levage (15a), et en ce que le bâti de levage (15a) peut être entraîné par un moteur de levage (18) et des moyens de levage (17) dans des guides verticaux (16).

5. Dispositif selon une des revendications 1 à 4,
caractérisé en ce que le chariot télescopique (10) monté sur le bâti de levage (15a) et le chariot de déplacement (14) peuvent être entraînés au moyen d'un entraînement commun (19), deux accouplements (20a, 20b) alternativement commutables étant prévus à la sortie (19a) de l'entraînement (19), et le chariot (10 ; 14) à chaque fois stationnaire étant maintenu fixe par un frein (21) à aimants permanents.

6. Dispositif selon une des revendications 1 à 5,
caractérisé en ce que le dispositif télescopique plat (11) peut être sorti ou rentré en direction Z au moyen d'un moteur télescopique (22), qui est monté sur le bâti de levage (15a).

7. Dispositif selon une des revendications 1 à 6,
caractérisé en ce que les marchandises individuelles (12) peuvent être serrées au moyen des paires de bras de butée ou d'entraîneur (13), avec une force limitée, contre des forces d'accélération.

8. Dispositif selon la revendication 7,
caractérisé en ce que la force de serrage pour les marchandises (12) peut être engendrée au moyen d'un moteur de serrage (23) et d'une tringlerie excentrique (24) raccordée à celui-ci, qui actionne, à chaque fois, une paire de volets (26) pouvant être appliqués de façon frontale sur les marchandises (12), par l'intermédiaire d'arbres de verrouillage (25) montés par paire dans le bâti de base (7).

9. Dispositif selon une des revendications 1 à 8,
caractérisé en ce que les paires de bras de butée ou d'entraîneur (13) sont montées de façon rotative aux extrémités (28a) d'un arbre (28) entraîné au moyen d'un entraînement (27) à bras pivotants.
